# EUROPEAN PATENT APPLICATION

(11) **EP 4 814 638 A1**
(43) Date of publication of application: **30.09.2026**
(21) Application number: 25166835.6
(22) Date of filing: 27.03.2025
(51) Int. Cl.: G05B 23/02, F24D 10/00, G06Q 50/06

(54) **A METHOD AND SYSTEM FOR DETECTING OPERATIONAL IRREGULARITIES IN A THERMAL ENERGY EXCHANGE SYSTEM**

(71) Applicant: VITO NV, 2400 Mol (BE); Cheddad, Abbas, 371 79 Karlskrona (SE); Alawadi, Sadi, 371 79 Karlskrona (SE); Ghazi, Ahmad Nauman, 371 79 Karlskrona (SE)
(72) Inventor: VAN DREVEN, Jonne, B-2400 Mol (BE); AL KOUSSA, Jad, B-2400 Mol (BE); VANHOUDT, Dirk, B-2400 Mol (BE); CHEDDAD, Abbas, 371 79 Karlskrona (SE); ALAWADI, Sadi, 371 79 Karlskrona (SE); GHAZI, Ahmad Nauman, 371 79 Karlskrona (SE)
(74) Representative: V.O.

(57) **Abstract**

Disclosed is a computer-implemented method and system for detecting operational irregularities in a thermal energy exchange system comprising a substation between a first (upstream) side and a second (downstream) side. The method obtains time-series measurement data indicative of the substation's operational conditions, segments the data into intervals representing recurring operational behavior, and generates an aggregate fault signature emphasizing short-term variations relative to baseline conditions. This fault signature is then provided to a machine-learning-based fault detection model configured to distinguish faulty behavior from normal operation. A fault condition is identified when the signature deviates from normal operational behavior beyond a predefined criterion, thereby enabling timely and accurate detection of operational faults in the substation and/or downstream heating or cooling systems.

## Description

### FIELD OF THE INVENTION

The invention relates to a computer-implemented method and system for detecting operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one substation connected to the first side and the second side, the substation being configured to facilitate thermal energy exchange between the first side and the second side, wherein one or more downstream heating/cooling systems at the second side are coupled to the at least one substation. The invention also relates to a district heating system comprising one or more substations and a supervisory control unit. The invention also relates to a control unit configured to perform the method of the disclosure.

### BACKGROUND TO THE INVENTION

District Heating (DH) systems have emerged as an important component in the pursuit of sustainable energy solutions, facilitating the delivery of thermal energy over extensive urban areas. These systems are known for their efficiency, especially when integrated with renewable energy sources, making them an important technology in reducing greenhouse gas emissions. Despite their advantages, however, DH systems face numerous operational challenges that can hinder their efficiency and reliability.

DH increasingly operate at lower temperatures and integrate with renewable energy, raising the stakes for reliable and efficient operation. This transition exacerbates the vulnerability of DH systems to faults such as malfunctioning valves, inaccurate sensors, or inappropriate control strategies, all of which can lead to elevated return temperatures. Such inefficiencies not only result in significant resource and/or financial implications, but also diminish the potential integration with other low-temperature networks.

A significant obstacle in maintaining efficient DH systems lies in the detection and diagnosis of faults, a process known as Fault Detection and Diagnosis (FDD). Traditional methods, predominantly based on regression models and Gaussian fault detection approaches, often fail under real-world conditions due to their inability to adapt to non-linear and complex patterns. The implementation of data-driven and predictive maintenance strategies has been impeded primarily by the lack of high-quality, labeled fault data necessary for reliable training and validation of algorithms. Such data scarcity is further compounded by the complexity and variability found across different DH substations, network configurations, and end-user consumption patterns, which significantly complicate the generalization of data-driven methodologies or statistics-based modeling.

Previous research has highlighted these shortcomings in existing methodologies, stressing the need for innovative approaches to overcome the limitations posed by data scarcity and the inherent complexities of DH substations. There is a strong desire for reliable techniques that can robustly handle unpredictable, real-world DH scenarios with the precision required to maintain operational reliability and optimize system performance.

There is a need for enhancing fault detection capabilities while effectively managing the diverse challenges presented by modern DH systems. The pressing need for novel methods capable of addressing these challenges remains important to the optimized operation of DH networks, ultimately supporting the global push toward sustainable, energy-efficient urban infrastructures.

### SUMMARY OF THE INVENTION

It is an object of the invention to provide for a method and a system that obviates at least one of the above-mentioned drawbacks.

Additionally or alternatively, it is an object of the invention to provide for an improved method and system for detecting operational irregularities in a thermal energy exchange system.

Additionally or alternatively, it is an object of the invention to improve the robustness of fault detection in district heating systems operating in real-world environments.

Additionally or alternatively, it is an object of the invention to overcome the challenge of limited labeled fault data in fault detection for district heating systems.

Thereto, the invention provides for a computer implemented method for detecting operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one substation connected to the first side and the second side, the substation being configured to facilitate thermal energy exchange between the first side and the second side, wherein one or more downstream heating/cooling systems at the second side are coupled to the at least one substation, wherein the method includes: obtaining time-series measurement data indicative of operational conditions in the substation; generating a fault signature from said time-series measurement data by segmenting the measurement data into one or more time-based intervals representative of repeating operational behavior, and producing, from the intervals, an aggregate representation that emphasizes short-term changes in the substation's operation relative to a baseline; providing the fault signature as an input to a machine-learning-based fault detection model trained or configured to distinguish faulty behavior from normal operation based on at least said fault signature as input; and identifying a fault condition in the district heating substation and/or in the one or more downstream heating/cooling systems coupled to the district heating substation when the fault signature is determined by the fault detection model to deviate from normal operational behavior beyond a predefined criterion.

The method involves obtaining time-series measurement data indicative of operational conditions in the substation. By segmenting this measurement data into time-based intervals representative of repeating operational behavior and producing an aggregate representation that emphasizes short-term changes relative to a baseline, a fault signature is generated. This fault signature captures dynamic variations that are indicative of potential faults. The fault signature is then input into a machine-learning-based fault detection model trained to distinguish faulty behavior from normal operation. When the model determines that the fault signature deviates from normal operational behavior beyond a predefined criterion, a fault condition is identified in the substation or in the downstream heating or cooling systems. This method offers the technical advantage of enhanced fault detection accuracy by emphasizing short-term operational changes that are indicative of irregularities, enabling timely identification and rectification of faults, thereby improving system reliability and efficiency.

When the fault detection model determines that the fault signature deviates from normal operational behavior beyond the predefined criterion, it identifies a fault condition in the substation or in the downstream heating or cooling systems. This allows for timely alerts, scheduling of maintenance actions, or automatic adjustments to operational parameters to mitigate detected or impending faults. By focusing on short-term operational changes and utilizing machine learning techniques, the method enhances fault detection accuracy, enabling proactive maintenance strategies that improve system reliability and efficiency.

This method offers a robust solution applicable to various fault types, including valve leaks, stuck valves, faulty sensors, incorrect control strategies, and abnormal consumption patterns. It is particularly valuable as DH networks evolve towards next generation systems, such as for instance the Fourth-Generation District Heating systems, which operate at lower temperatures and integrate renewable energy sources, thereby reducing the margin for operational errors. The invention's ability to detect faults accurately, even with limited labeled data, represents a significant advancement in maintaining the efficiency and sustainability of modern thermal energy exchange systems.

Optionally, the time-series measurement data is obtained over one or more operational periods and includes at least one temperature measurement, a derived temperature difference, or any combination thereof the obtained measurement data is segmented into discrete time-based intervals representative of substation operation, each interval covering at least part of a daily cycle.

By focusing on temperature measurements and their differences, specifically, the temperature differential between supply and return temperatures, the method effectively captures important variations in the substation's heat exchange performance. Fault conditions tend to introduce unpredictable and erratic patterns with high variance in the data, whereas normal operations display stable and predictable patterns. These discrepancies may be amplified, for instance using first-order differencing, making it easier to distinguish between faulty and normal states.

Various types of machine learning models can be used. A neural network may be used that is trained to reconstruct input data. If it struggles to accurately reconstruct new data, this indicates a deviation from the learned normal behavior, signaling a potential fault. Support vector machines for example are configured to identify the boundaries of normal operation; data points falling outside these boundaries are flagged as anomalies.

Upon deployment, the fault detection model analyzes the generated fault signatures from operational DH substations. By comparing the fault signature to the learned representations of normal and faulty behavior, the model identifies faults when deviations exceed predefined criteria. This process enables the early detection of operational irregularities, facilitating timely maintenance actions and improving the overall efficiency and reliability of the DH system.

In some examples, the models are initially trained on the faulty bearing data to learn generalized fault patterns due to the similarities between the erratic behaviors observed in faulty bearings and DH systems under fault conditions. The transfer learning approach allows the models to use these learned features and adapt them to the DH domain. The models are then fine-tuned with lab-generated DH data, which provides ground truth for various fault scenarios, enhancing the models' specificity and robustness in detecting DH system faults. However, it will be appreciated that, for example in the case enough data (in DH) is available, transfer learning could be omitted, and models can be trained solely on the fault signatures.

Focusing on temperature measurements and their differences allows to capture important variations in heat exchange performance. An improved detection of operational irregularities through targeted analysis of relevant thermal data over meaningful time frames can be obtained. By highlighting the short-term changes and accentuating the differences caused by faults, the method enhances the ability to detect and address issues promptly, ultimately leading to more efficient and reliable DH system operations.

Optionally, after segmenting and prior to producing the aggregate representation, one or more normalization or standardization steps are performed on each interval.

This preprocessing ensures that data from different intervals are scaled consistently, facilitating meaningful comparison and aggregation. By normalizing the data, the method mitigates the impact of varying measurement scales and offsets, emphasizing relative changes over absolute values. This enhances the fault detection model's ability to identify anomalies by focusing on intrinsic patterns rather than extrinsic variations. The robustness and/or accuracy in fault detection can be improved through standardized data representation.

After segmenting the time-series measurement data into discrete intervals representative of repeating operational behavior, such as daily cycles, the method may perform normalization or standardization on each interval. Specifically, it may employ z-score normalization, where each data point within an interval is transformed by subtracting the interval's mean and dividing by its standard deviation. This process scales the data so that each interval has a mean of zero and a standard deviation of one, effectively placing all intervals on a common scale.

Such exemplary normalization can be important because it can ensure that data from different intervals, which may originally have varying measurement scales due to changes in operational conditions or external factors like weather, are scaled consistently. By standardizing the data, the method mitigates the impact of absolute values and offsets, allowing for meaningful comparison and aggregation of patterns across intervals. It emphasizes the relative changes and intrinsic behavior within each interval rather than extrinsic variations that can obscure the underlying operational patterns.

By focusing on these intrinsic patterns, the method enhances the fault detection model's ability to identify anomalies indicative of faults. The standardized data highlights subtle variations and short-term changes in the substation's operation, which are important for distinguishing faulty behavior from normal operations. This approach can effectively reduce the influence of extraneous factors and amplifies the detection of irregularities that may signify potential faults.

Machine learning models, such as autoencoders or one-class support vector machines, rely on identifying deviations from learned patterns of normal behavior. Standardization ensures that these models are not misled by variations in measurement scales or offsets, enabling them to focus on detecting true anomalies. Consequently, the method improves the reliability of fault detection in the thermal energy exchange system, leading to more effective maintenance actions and operational efficiency.

Optionally, the method further includes aligning the intervals using a dynamic time-warping-based technique to compensate for temporal shifts in operational behavior from one interval to another.

Such alignment addresses timing discrepancies in recurring patterns due to operational variations. By using dynamic time warping (DTW), the method adjusts the time axes of the intervals to align similar features despite temporal offsets. This allows for more precise aggregation of patterns and highlights consistent behaviors across intervals. This provides for an improved ability to detect faults by ensuring that comparable operational features are properly aligned and analyzed.

Dynamic time warping can adjust the time axes of the intervals by stretching or compressing them, allowing similar features to align even if they occur at slightly different times in different intervals. For example, a peak in operational data that occurs at 12:00 p.m. on one day may occur at 12:10 p.m. on another day due to operational variations. By means of DTW, these peaks can be effectively aligned despite the time offset.

By addressing timing discrepancies in recurring patterns, the method ensures that the key features of the data, such as peaks and troughs indicative of normal or faulty behavior, are effectively aligned across all intervals. This alignment can be important before aggregating the patterns to create an average operational pattern that represents typical behavior over a certain period. It allows for a more accurate comparison of patterns and highlights consistent behaviors, which may be obscured if the data were not properly aligned.

Implementing DTW in this context improves the ability to detect faults by ensuring that comparable operational features are analyzed together. By aligning similar patterns despite temporal shifts, the method enhances the precision of fault detection models, such as machine learning algorithms trained to distinguish between normal and faulty operations. The effect of using dynamic time warping is the enhanced detection performance due to the accurate alignment of data, which allows for more precise aggregation and analysis of operational patterns, ultimately leading to more reliable identification of faults in the thermal energy exchange system.

Optionally, the dynamic time-warping-based technique comprises dynamic time warping barycenter averaging (DBA-DTW) with a warp constraint to prevent that the alignment over-extends segments of the time series.

This approach can produce a robust average pattern that represents typical operational behavior while preserving temporal relationships. The warp constraint ensures that the alignment does not distort the data excessively, maintaining the integrity of the original measurements. By generating an accurate aggregate representation, the method enhances the fault detection model's capability to discern deviations from normal behavior. The technical advantage is the creation of a reliable baseline for fault detection through refined alignment techniques.

In some examples, the process begins by segmenting the collected substation time-series measurement data into time-based intervals representative of repeating operational behavior, such as daily periods. This segmentation allows the isolation of daily operational patterns for analysis. Each interval is then standardized using z-score normalization, converting the data to a consistent scale with a mean of zero and a standard deviation of one. This standardization emphasizes the relative behavioral patterns from time step to time step, facilitating comparison across different days by eliminating differences due to absolute magnitudes. To compensate for temporal shifts in operational behavior from one interval to another, the intervals are aligned using DBA-DTW with a warp constraint. The warp constraint prevents over-extension of time series segments during alignment, ensuring that the alignment does not distort the data excessively and maintains the integrity of the original measurements. This alignment adjusts for slight timing differences, such as shifts in peak times, resulting in aligned intervals where similar events occur at corresponding time steps.

An average operational pattern is then generated from these aligned intervals by computing an average pattern at each time point across all aligned days. This produces a smoothed reference curve that represents the typical behavior of the substation over the defined period, effectively reducing noise and irregularities. To emphasize short-term changes in the substation's operation relative to a baseline, a first-order differencing operation may be applied to the average operational pattern. This operation computes the difference between each time step and the immediately preceding time step, capturing dynamic changes indicative of the operational state. Small, gradual changes in normal operation yield small differences, while faults often cause abrupt, erratic fluctuations resulting in larger differences.

The average pattern can be determine using various methods, for example mean, median, weighted mean, etc.

By generating this accurate aggregate representation that emphasizes changes over time, the method can enhance the fault detection model's capability to discern deviations from normal behavior. The refined alignment techniques, incorporating the warp constraint to preserve temporal relationships and data integrity, contribute to creating a reliable baseline for fault detection. This allows the model to effectively detect faults by identifying patterns that deviate significantly from the learned representation of normal operation, ultimately improving the reliability and efficiency of the thermal energy exchange system.

Optionally, comprising generating an average operational pattern for a given time-based interval based on aligned intervals.

By averaging the aligned data, the method can reduce the influence of anomalous fluctuations and can emphasize consistent operational features. This facilitates the identification of significant deviations indicative of faults. As a result, the fault detection accuracy can be enhanced by establishing a robust normal operating profile against which anomalies can be detected.

In some examples, once the data is aligned, an average operational pattern is generated by averaging the aligned intervals. This average pattern smooths out noise and irregularities, such as those caused by random fluctuations or transient events like domestic hot water usage. By aggregating the aligned data, the method reduces the influence of anomalous fluctuations and emphasizes the consistent operational features that are characteristic of normal system behavior. The resulting average pattern serves as a clear representation of typical operation over the specified time period.

Optionally, the method further comprises applying a differencing operation to said average operational pattern in order to increase changes in measurements from one time step to a subsequent time step, wherein the differencing operation computes, for each time step in the average operational pattern, a difference between said time step and the immediately preceding time step.

This operation computes the difference between each time step and its immediate predecessor, effectively highlighting short-term variations in the system's behavior. By focusing on these dynamic changes, the method accentuates abrupt fluctuations and trends that are indicative of faults, such as sudden spikes or drops in temperature readings or flow rates.

This process transforms the average operational pattern into a representation that captures the "vibrations" or irregularities associated with faulty conditions. By emphasizing the rate of change rather than static values, the differencing operation makes subtle anomalies more prominent and detectable by machine-learning-based fault detection models, such as autoencoders or one-class support vector machines. These models are trained to recognize the normal patterns of operation, and the enhanced emphasis on dynamic changes allows them to more effectively distinguish between normal and faulty behavior.

Advantageously, an improved sensitivity to faults can be obtained in this way. By focusing on the dynamic aspects of the data, the method enables the timely identification of operational irregularities, even when they manifest as minor but abrupt changes in the system's behavior. This is particularly important in DH systems where faults can lead to significant inefficiencies and energy losses. Additionally, by capturing patterns similar to those found in other domains with vibration-based fault characteristics, such as mechanical bearings, the method facilitates the application of transfer learning techniques. This allows for leveraging fault detection knowledge from related domains, further enhancing the effectiveness and robustness of the fault detection models.

In some examples, a first-order differencing may be applied to the average operational pattern. This operation computes the difference between each time step and the immediately preceding time step, accentuating short-term changes in the system's operation.

The exemplary combination of data alignment, averaging, and differencing can result in a fault signature that effectively captures the important characteristics of normal operation while minimizing the impact of noise and transient irregularities. This robust normal operating profile provides a baseline against which anomalies can be detected. When provided to a machine-learning-based fault detection model, significant deviations from this baseline are more readily identified, facilitating the detection of operational irregularities or faults in the system.

Optionally, the fault detection model is implemented as an autoencoder, the autoencoder being trained or configured to learn a representation of at least one class of operational behavior.

To enhance the model's ability to distinguish between normal and irregular behaviors, the method generates fault signatures from time-series measurement data collected from substations. This process involves segmenting the measurement data into time-based intervals, such as daily periods, to capture repeating operational patterns. In some examples, each segment is standardized, for instance utilizing z-score normalization, ensuring that all measurements are on a similar scale and emphasizing relative changes rather than absolute values.

In some examples, to compensate for temporal shifts in operational behavior, DTW can be applied. DTW aligns the daily data patterns by adjusting the time axis of each segment, ensuring that similar patterns overlap even if they occur at slightly different times.

In some examples, after alignment, an average operational pattern is computed by aggregating the aligned segments over a given period, smoothing out noise and irregularities to represent the typical behavior of the substation.

In some examples, to highlight short-term changes indicative of faults, first-order differencing is applied to the average pattern. This step computes the difference between successive time steps, accentuating variations akin to vibrations observed in faulty mechanical systems.

In some examples, the resulting fault signature emphasizes these variations, allowing the autoencoder to capture the underlying patterns of both normal and faulty operations more effectively.

When the fault signature is provided to the autoencoder, the model encodes and decodes the input data to reconstruct the learned representation of operational behavior. If the input data deviates from what the autoencoder has learned, such as when a fault is present, the reconstruction error increases significantly. This higher reconstruction error signals a potential fault condition. The model can effectively detect anomalies through unsupervised learning, improving fault detection accuracy without the need for extensive labeled data. The effect is an enhanced capability to identify operational irregularities in complex systems by leveraging fault signatures and the inherent ability of autoencoders to model intricate patterns in the data.

Optionally, the temperature difference is defined as a difference between a supply temperature and a return temperature of the district heating substation measurement data used in generating the fault signature comprises said temperature difference over a plurality of time steps.

The temperature difference, denoted as ΔT, used in generating the fault signature is defined as the difference between the supply temperature (Ts) and the return temperature (Tr) of the district heating substation, expressed as ΔT = Ts - Tr. Measurement data comprises this temperature difference collected over multiple time steps, providing a time series of ΔT values that reflect the substation's operational performance. By focusing on the temperature difference, the method directly assesses the efficiency of thermal energy exchange within the substation. Anomalies in ΔT can indicate faults such as leaks, blockages, faulty sensors, or control issues like stuck or leaking valves. In normal operation, ΔT remains relatively stable, indicating efficient heat transfer from the primary to the secondary side. However, faults introduce irregularities and increased variability in ΔT, manifesting as erratic patterns or abrupt changes over time.

A precise detection of faults impacting thermal efficiency can be obtained by monitoring an important operational parameter, ΔT. By focusing on the temperature difference and its temporal variations, the method directly correlates anomalies in ΔT with specific fault conditions affecting the substation's performance. Additionally, the resemblance between the erratic patterns in faulty ΔT data and vibration patterns in mechanical systems allows the use of transfer learning from domains like mechanical fault data, e.g. time-series sensor measurement data that captures a behavior of mechanical systems experiencing faults such as faulty bearings. This leverages existing fault patterns to enhance the fault detection model's performance, even when labeled data in the district heating domain is limited. Overall, monitoring and analyzing ΔT provides a robust and reliable means of detecting faults, ultimately improving the operational efficiency and reliability of district heating systems.

Optionally, the fault detection model is pre-trained on fault data originating from mechanical bearings or another domain exhibiting periodic or vibration-based fault characteristics the fault detection model is subsequently fine-tuned using labeled or partially labeled district heating substation data, in order to transfer learned fault patterns from said external domain to the district heating substation domain.

This effectively addresses the challenge of limited labeled fault data by leveraging transfer learning (TL) from a mechanical domain exhibiting particular fault characteristics, such as mechanical bearings with vibration-based faults (significant fault data is available from this domain). The approach involves pre-training a machine learning (ML) fault detection model on abundant fault data from a source domain (including time-series sensor measurement data that captures a behavior of mechanical systems experiencing faults) and subsequently fine-tuning it with available labeled or partially labeled data from DH substations. This transfer of knowledge allows the model to recognize fault patterns in DH systems despite the scarcity of labeled data.

By focusing on these fault signatures, the ML models, such as Autoencoders (AEs) or One-Class Support Vector Machines (OCSVMs), can learn to distinguish between normal and faulty behavior. Autoencoders, in particular, are trained to compress and reconstruct the data; significant reconstruction errors indicate that the input deviates from the learned normal patterns, signaling a potential fault.

The pre-trained model, having learned fault characteristics from the source domain, is fine-tuned using the available DH substation data to adapt to the specific characteristics of the thermal energy exchange system. This fine-tuning process adjusts the model parameters to better fit the target domain, enhancing fault detection performance.

In experiments, the method demonstrated robust performance in detecting faults in both lab-generated data and real-world DH systems. Faults in the DH substations manifest as unpredictable, erratic patterns with high variance in the fault signatures, similar to the increased vibrations seen in faulty mechanical bearings. By transferring knowledge from the bearing fault domain, where abundant fault data is available, the model overcomes the data scarcity challenge in DH systems and achieves enhanced fault detection performance.

This approach not only improves fault detection accuracy but also provides valuable insights into the operational health of DH substations. It enables the detection of various faults, such as valve issues, faulty sensors, wrong control strategies, and deviations from normal behavior, facilitating proactive maintenance and contributing to the operational efficiency and sustainability of district heating networks.

Optionally, the measurement data for each interval includes a plurality of sensor-derived parameters usable for identifying recurring district heating substation behavior over repeated operational periods.

Including multiple sensor-derived parameters such as temperatures, flows, and pressures in the measurement data for each interval allows the method to capture a comprehensive, multi-dimensional view of the district heating substation's operational state over repeated periods. By analyzing these diverse parameters, for example simultaneously, the method identifies recurring behaviors and patterns that reflect the complex interactions within the system. This whole approach enhances the fault signature's capacity to detect subtle anomalies and deviations from normal operation that may not be apparent when considering a single parameter. Techniques like standardization and/or dynamic time warping can be optionally employed to align and compare the time-series data effectively, ensuring that variations in timing and/or scale do not obscure significant patterns.

The inclusion of multiple parameters can effectively enrich the dataset used by machine learning models, such as autoencoders or support vector machines, enabling them to learn more accurate representations of normal and faulty behavior. Consequently, accuracy and reliability of fault detection can be improved, allowing for the identification of faults that may otherwise remain undetected, and thereby enhancing the efficiency and reliability of the district heating system.

Optionally, comprising diagnosing a type of fault based on the output of the fault detection model.

Furthermore, the method includes diagnosing the specific type of fault based on the output of the fault detection model. By analyzing the particular features and characteristics of the deviations identified in the fault signatures, the model can determine the probable cause of the fault. Different faults in district heating (DH) substations, such as valve malfunctions (e.g., stuck valve, valve leak), sensor errors (e.g., deviating temperature sensor), or improper control strategies (e.g., high heat curve setting), produce distinct patterns in the measurement data and their corresponding fault signatures. The machine learning models, especially those enhanced through transfer learning, can be trained to recognize these patterns and associate them with specific fault types.

This diagnostic capability allows operators to not only detect that a fault has occurred but also to understand its nature. By examining the specific anomalies in the fault signatures, the models can categorize the faults, providing actionable insights for maintenance and repair activities. For example, a signature indicative of abrupt temperature fluctuations may suggest a valve issue, while irregularities correlated with sensor readings can point to a faulty sensor. Recognizing the type of fault enables targeted interventions, such as adjusting control parameters, repairing or replacing faulty components, or recalibrating sensors.

This can facilitate informed decision-making for fault rectification. It enhances maintenance efficiency by allowing for precise fault identification, which reduces system downtime and lowers operational costs. By enabling maintenance personnel to promptly address the specific issues causing operational irregularities, the method improves the reliability and efficiency of DH systems. Consequently, it supports more effective predictive maintenance strategies and contributes to the overall sustainability of the energy network.

Optionally, the output of the fault detection model triggers at least one maintenance action for the district heating substation, comprising generating an alert, scheduling an on-site inspection, and/or automatically adjusting an operational parameter to mitigate a detected or impending fault.

Upon detecting deviations, e.g. manifested as erratic fluctuations indicative of faults, the system can automatically initiate operational and/or maintenance actions. These actions may for example include generating immediate alerts to notify operators, scheduling on-site inspections for timely intervention, and operationally adjusting operational parameters to mitigate detected or impending faults. By steering these responses, the system can effectively enhance operational safety and efficiency. Immediate alerts can prompt swift human attention, scheduled inspections optimize maintenance workflows, and/or automatic adjustments prevent fault escalation. This proactive management approach reduces the impact of faults, minimizes energy losses and financial costs, and improves overall service reliability of the thermal energy exchange system.

According to an aspect, the invention provides for a detection system for detecting operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one substation connected to the first side and the second side, the substation being configured to facilitate thermal energy exchange between the first side and the second side, wherein one or more downstream heating/cooling systems at the second side are coupled to the at least one substation, the detection system comprising: one or more processors; and memory storing instructions that, when executed by the one or more processors, cause the system to: obtain time-series measurement data indicative of operational conditions in the district heating substation; generate a fault signature from the time-series measurement data by segmenting the measurement data into one or more time-based intervals representative of repeating operational behavior, and producing, from those intervals, an aggregate representation that emphasizes short-term changes in the district heating substation's operation relative to a baseline; provide the fault signature as input to a machine-learning-based fault detection model, wherein the fault detection model is trained or configured to distinguish faulty behavior from normal operation based on at least the fault signature as input; and identify a fault condition in the district heating substation and/or in the one or more downstream heating/cooling systems coupled to the district heating substation when the fault signature is determined by the fault detection model to deviate from normal operational behavior beyond a predefined criterion.

The fault signatures can be refined representations of the daily operational patterns of a DH substation. Fault signatures emphasize short-term changes in the system's behavior, highlighting deviations that may indicate faults.

By focusing on the changes between consecutive time steps, the fault signatures capture the dynamic behavior of the substation, making it easier to distinguish between normal and faulty operations.

In some examples, the method may utilize knowledge from a related domain with abundant fault data to overcome the scarcity of labeled fault data in DH systems. For example, experiments have demonstrated that faults introduce erratic, high-variance patterns, while normal operations exhibit stable, predictable patterns. This distinction mirrors the way faults in mechanical bearings cause increased vibrations, highlighting the effectiveness of transferring knowledge from the bearing fault domain.

According to an aspect, the invention provides for a district heating system comprising one or more substations and a supervisory control unit configured to perform the method according to the disclosure in order to at least detect fault conditions throughout a district heating network.

The district heating system may integrate a fault detection method into a supervisory control unit (centralized or distributed), enabling comprehensive monitoring and management of one or more substations throughout the network. This method enhances fault detection in district heating (DH) systems by addressing the challenge of limited labeled fault data. Fault signatures, which are patterns representing daily operational behavior in the substations, are effectively employed for distinguishing between normal and faulty operations.

By integrating this fault detection method into the supervisory control unit, oversight of all substations can be achieved. This enables the system to detect faults network-wide, optimize operational efficiency, reduce energy losses, and coordinate maintenance activities proactively. The advantage lies in the enhanced performance of the entire district heating system through improved fault detection and management capabilities. This leads to improved energy efficiency, reduced operational costs, and increased customer satisfaction due to more reliable and consistent thermal management services.

It will be appreciated that any of the aspects, features and options described in view of the method apply equally to the system and the described district heating system and supervisory control unit. It will also be clear that any one or more of the above aspects, features and options can be combined.

### BRIEF DESCRIPTION OF THE DRAWING

The invention will further be elucidated on the basis of exemplary embodiments which are represented in a drawing. The exemplary embodiments are given by way of non-limitative illustration. It is noted that the figures are only schematic representations of embodiments of the invention that are given by way of non-limiting example.

In the drawing:
Fig. 1 shows a schematic diagram of an embodiment of an exemplary detection system;
Fig. 2 shows a schematic illustration of data processing steps;
Fig. 3 shows a schematic diagram of an embodiment of an exemplary autoencoder;
Fig. 4 shows a schematic diagram of an embodiment of graphs; and
Fig. 5 shows a schematic diagram of an embodiment of graphs.

### DETAILED DESCRIPTION

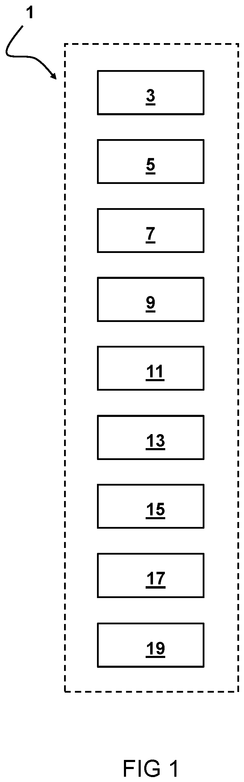

Fig. 1 shows a schematic diagram of an embodiment of a detection system 1. configured to detect operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one substation connected to the first side and the second side, the substation being configured to facilitate thermal energy exchange between the first side and the second side, wherein one or more downstream heating/cooling systems at the second side are coupled to the at least one substation. The detection system may include one or more processors, and a memory storing instructions that, when executed by the one or more processors, cause the system to: obtain time-series measurement data indicative of operational conditions in the district heating substation; generate a fault signature from the time-series measurement data by segmenting the measurement data into one or more time-based intervals representative of repeating operational behavior, and producing, from those intervals, an aggregate representation that emphasizes short-term changes in the district heating substation's operation relative to a baseline; provide the fault signature as input to a machine-learning-based fault detection model, wherein the fault detection model is trained or configured to distinguish faulty behavior from normal operation based on at least the fault signature as input; and identify a fault condition in the district heating substation and/or in the one or more downstream heating/cooling systems coupled to the district heating substation when the fault signature is determined by the fault detection model to deviate from normal operational behavior beyond a predefined criterion.

The first side may be an upstream section of the thermal energy exchange system (e.g. district heating/cooling system) where heating or cooling energy is generated. The first side may include facilities such as power plants, heating plants, cooling plants, or renewable energy sources like geothermal wells or solar thermal collectors. These facilities generate thermal energy that is supplied to the rest of the network.

The second side is the downstream section where the generated thermal energy is consumed. The second side may encompass residential, commercial, or industrial buildings and facilities that utilize the thermal energy for heating or cooling purposes. This side may include various end-user systems like radiators, underfloor heating, air conditioning units, industrial process heating systems, etc.

An interface can be provided via one or more substations thermally coupling the first side and the second side. The substation can serve as an important exchange point, facilitating the transfer of thermal energy from the supply side to the consumption side. It typically contains heat exchangers, control valves, pumps, and measurement instruments. The substation regulates flow rates, temperatures, and pressures to ensure efficient and safe energy transfer.

Coupled to the substation on the second side are one or more downstream heating/cooling systems. These systems represent the individual or collective heating and cooling installations within buildings or facilities that directly consume the thermal energy supplied through the substation.

The detection system 1 is responsible for monitoring and detecting operational irregularities within the thermal energy exchange system. The detection system collects time-series measurement data indicative of operational conditions within the substation. This data can include parameters such as supply and return temperatures, flow rates, pressure readings, and temperature differentials. Sensors installed at key points within the substation and/or possibly within the downstream systems provide continuous or periodic measurements.

The collected measurement data is segmented into one or more time-based intervals representative of repeating operational behavior. For example, data may be segmented into daily cycles to capture diurnal variations in energy consumption or system operation. From the segmented intervals, the detection system produces an aggregate representation that emphasizes short-term changes in the substation's operation relative to a baseline. This process may involve normalization/standardization, in which data is adjusted to a common scale to eliminate the effects of differing units or magnitude; alignment using dynamic time warping (DTW), in which DTW or similar techniques are applied to align the time intervals, compensating for temporal shifts and differences in operational patterns between intervals, so as to ensure that similar features occur at the same time indices across intervals; average operational pattern generation, in which an average pattern is computed from the aligned intervals to represent typical operation; and/or a differencing operation, in which a differencing operation is applied to the average pattern to highlight changes between consecutive time steps, thereby emphasizing transient events and anomalies.

The generated fault signature is supplied to a fault detection model. This model is trained or configured to distinguish faulty behavior from normal operation based on input data. It may be implemented using machine learning techniques. Examples are deep learning models and neural networks. In some examples, autoencoders are employed. This can be a neural network architecture that learn to reconstruct input data by learning a compressed representation. Anomalies can be detected when the reconstruction error exceeds a certain threshold. In some examples, supervised or unsupervised learning models are employed, depending on the availability of labeled data, models may be trained to recognize patterns associated with faults. Various machine learning models may be used. Another example is a super vector machine learning model.

The fault detection model analyzes the fault signature to determine deviations from normal operational behavior. If the deviations exceed predefined criteria or thresholds, the detection system identifies a fault condition in the substation and/or the downstream heating/cooling systems.

Fault conditions may include, but are not limited to, malfunctioning components (e.g., valves stuck open or closed, failing pumps), inefficient heat exchange due to fouling or scaling, leaks or blockages causing atypical flow rates or pressure drops, sensor failures resulting in erroneous readings.

Upon detection of a fault condition, the detection system may initiate various actions, such as, but not limited to, generating alerts by sending notifications to system operators, maintenance personnel, or automated systems indicating the nature and location of the fault; scheduling on-site inspections by arranging for technicians to investigate and rectify the issue; performing automatic adjustments by modifying operational parameters such as flow rates or temperature setpoints to mitigate the fault until it can be addressed fully.

Advantageously, to align operational patterns that may have temporal shifts (e.g., peak consumption times varying slightly each day), DTW can be employed. This technique allows for the elastic shifting of time series data to find an optimal alignment. Constraints such as a warp window limit may be applied to prevent excessive stretching or compression of time segments, ensuring meaningful alignment.

By focusing on short-term changes rather than absolute values, the detection system is sensitive to anomalies that manifest as abrupt deviations from normal operation, which may not be evident in longer-term averages.

In some examples, the fault detection model may initially be trained on data from analogous systems exhibiting periodic or vibration-based faults (e.g., mechanical bearing vibration data). This transfer learning approach leverages existing knowledge to improve model performance when limited labeled data is available in the thermal energy domain. The model can be for example subsequently fine-tuned using labeled or partially labeled data from the actual thermal energy exchange system to adapt it to the specific operational characteristics and fault types encountered.

In some examples, the temperature difference (ΔT), calculated as the difference between supply and return temperatures, can be employed. It reflects the efficiency of heat exchange and can indicate issues like insufficient heat transfer, which may result from fouling, air in the system, or improper flow rates. It will be appreciated that a range of sensor-derived parameters, including flow rates, pressures, energy consumption metrics, etc. may be used. The use of multi-dimensional data can enhance the model's ability to detect complex faults that may not be apparent from a single parameter.

It will be appreciated that the principles apply to networks with multiple substations and downstream systems. The detection system can be part of a centralized supervisory control and data acquisition (SCADA) system, overseeing an entire district heating or cooling network.

The detection system may be configured to process real-time or near-real-time sensory or sensor-derived data, enabling prompt detection of faults. This reduces downtime and prevents minor issues from escalating into major failures.

By accurately identifying fault types and locations, the system 1 facilitates targeted maintenance, reducing costs and improving resource allocation.

In the shown exemplary embodiment, the detection system 1 comprises several interconnected modules, each responsible for specific functions.

A sensor data acquisition module 3 may be arranged to interface with one or more sensors (e.g. an array of sensors) embedded for instance within the district heating substation and/or downstream heating/cooling systems coupled to said at least one district heating substation. This module 3 may collect time-series measurement data indicative of operational conditions, such as supply and return temperatures, flow rates, pressure levels, and temperature differentials (ΔT). It can support various communication protocols to ensure compatibility with disparate sensor types and manufacturers. In some examples, data buffering mechanisms may be incorporated to handle varying data rates and/or ensure synchronization.

In the shown example, a data preprocessing module 5 is provided that is configured to perform one or more data processing steps on the received data (e.g. collected or obtained). For instance, module 5 may have a filtering and cleaning submodule that applies signal processing techniques to remove noise and correct for sensor anomalies. Techniques may include low-pass filtering, median filtering, and interpolation for missing data points.

In some examples, module 5 includes a normalization and standardization submodule that for instance scales the measurement data to a common range or distribution to eliminate biases due to differing units or magnitudes. Methods such as min-max scaling or z-score normalization may for instance be utilized.

In some examples, module 5 includes a segmentation submodule that divides the continuous time-series data into discrete, time-based intervals representative of repeating operational behavior (e.g., daily or weekly cycles). Segmentation accounts for system-specific operational schedules and patterns.

In the shown example, a dynamic time warping (DTW) alignment module 7 is provided that implements dynamic time warping algorithms to align segmented intervals temporally, compensating for shifts or variances in operational patterns across intervals. In some examples, it employs DTW Barycenter Averaging (DBA) with warp constraints to prevent excessive stretching or compression of time sequences, ensuring meaningful alignment without distorting important features. The warp constraint parameter may be adjustable based on domain knowledge, balancing alignment accuracy with computational efficiency.

In the shown example, an aggregate representation generator 9 is provided that is configured to constructs an average operational pattern from the aligned intervals, representing the baseline or typical behavior of the substation over the specified interval. It may effectively emphasize the common features across intervals while smoothing out random fluctuations. In some examples, it may compute statistical measures (mean, median) or apply weighted averaging based on confidence levels in the data.

In the shown example, a differencing operation module 11 is provided that is configured to apply a differencing transformation to the aggregate operational pattern to accentuate short-term changes in the system's operation. It may be configured to calculate the difference between consecutive time steps, effectively highlighting trends, shifts, and transient anomalies that may be indicative of fault conditions. The differenced data enhances the sensitivity of subsequent analysis to abrupt changes often associated with equipment malfunctions or irregularities.

In the shown example, a feature extraction module 13 is provided that is configured to extract relevant features from the differenced operational pattern to form the fault signature. Features may include statistical descriptors (mean, variance), frequency-domain representations (via Fourier or Wavelet transforms), and time-domain characteristics (peak amplitudes, duration of anomalies). It may for example employ dimensionality reduction techniques (e.g., Principal Component Analysis, t-SNE) to distill the most informative aspects of the data while reducing computational complexity.

In the shown example a machine learning-based fault detection model 15 is provided. It may for example utilizes an autoencoder neural network comprising encoder and decoder layers configured to learn efficient representations of normal operational behavior. However, other machine learning models may also be used.

In some examples, during the training phase, pre-training is performed on external datasets exhibiting periodic or vibration-based fault characteristics, such as mechanical bearing vibration data, to use transfer learning. Subsequently, fine-tuning may be employed using labeled or semi-labeled data from the district heating substation (and/or downstream systems coupled thereto), adapting the model to the specific domain and operational nuances. Regularization techniques (e.g., dropout, weight decay) can be applied to prevent overfitting and enhance generalization.

During the inference phase, the fault signature generated by the feature extraction module 13 can be processed. Reconstruction errors may be computed by comparing the input fault signature to the output reconstructed by the exemplary autoencoder (or any other suitable ML model). Anomaly scores can be derived based on the magnitude of reconstruction errors; e.g. higher scores indicating deviations from learned normal behavior.

In the shown example, a fault decision module 17 is provided that compares the anomaly scores against predefined thresholds or criteria to determine the presence and severity of a fault condition. In some examples, it may incorporate decision logic that may consider additional contextual information, such as operational schedules, environmental conditions, and historical fault data. Module 17 may for example categorize faults into detection types (e.g., sensor failure, valve malfunction, heat exchanger inefficiency) based on patterns in the anomaly scores and extracted features.

In the shown example, an action module 19 is provided that is configured to take action based on a detected fault. For example, the action module 19 may include an alert generation unit that sends notifications or alerts to operators, maintenance personnel, or automated systems. Alerts can be prioritized based on fault severity and potential impact for example. Additionally or alternatively, module 19 may include an automated response unit that initiates immediate control actions when appropriate, such as adjusting control valves, resetting equipment, or switching to backup systems to mitigate the detected fault. Additionally or alternatively, module 19 may include maintenance scheduling unit that integrates with maintenance management systems to plan and schedule on-site inspections or repairs, optimizing resource allocation and minimizing downtime.

In some examples, a user interface may be provided (not shown) that provides a visual dashboard displaying real-time system status, alerts, and historical trends. Such interface can enable operators to drill down into specific faults, view detailed analyses, and adjust system parameters as needed.

Also, in some examples, a data storage and management module (not shown) can be used that stores historical measurement data, processed fault signatures, model parameters, and fault detection results.

Also, in some examples, a communication interface (not shown) may be used that manages data exchange with external systems, such as supervisory control and data acquisition (SCADA) systems, enterprise resource planning (ERP) systems, and/or cloud-based analytics platforms.

By leveraging preprocessing and machine learning techniques, the detection system 1 improves the sensitivity of fault detection, reducing false positives and missed detections. Early detection of operational irregularities allows for proactive maintenance, preventing minor issues from escalating into major failures and reducing downtime.

Moreover, insights gained from the detection system 1 can inform operational adjustments and optimizations, leading to energy savings and improved system performance. The system can adapt to changing operational conditions over time, continuously improving its performance as more data becomes available.

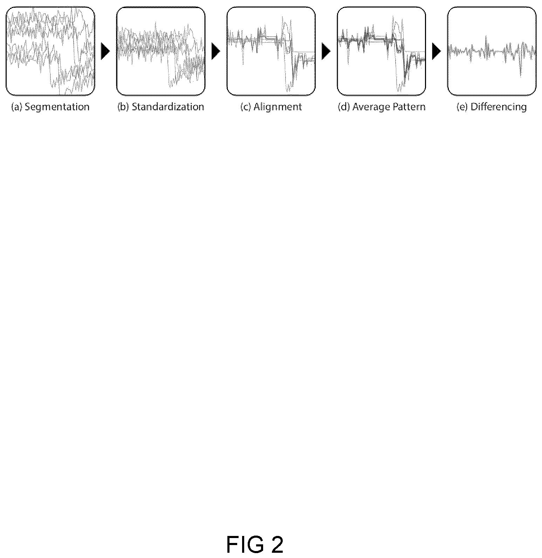

Fig. 2 shows a schematic illustration of data processing steps. These exemplary data processing steps can effectively improve the detection of faults in DH substations. Fault signatures can be seen as time patterns (e.g. daily patterns) that represent normal or faulty operations in a DH system. These signatures are critical because they form the basis for identifying whether a fault has occurred.

In some examples, the process for fault signatures may include the following steps:
(a) The collected substation data is divided into segments, such as daily periods, to capture typical system behavior over time.
(b) The segmented data is standardized (using a method called z-score normalization) to ensure all measurements are on a similar scale, making it easier to compare patterns across different scenarios. This narrows the signature down to "behavior" from time step to time step, compared to other daily signatures, instead of their absolute values/magnitude.
(c) To align the daily data patterns, a method called Dynamic Time Warping is used. This technique ensures that the data is properly aligned even if there are time differences in the way faults develop.
(d) Once the data is aligned, an average pattern is created that represents the typical behavior of the substation over a day (based on for instance a week), smoothing out any noise or irregularities (e.g., domestic hot water use). In essence, the pattern shows the repeating behavior of a day over a certain time period.
(e) Finally, the data is processed further to capture important changes over time (called first-order differencing). These refined patterns become the fault signatures.

Based on experiments, it has been identified that faults create unpredictable, erratic patterns (high variance), while normal operations follow a stable, predictable pattern. This insight can be exploited in different ways. It makes it easy to tell the difference between normal and faulty behavior, and it mirrors how faults in mechanical systems, like bearings, are detected, faults cause more vibrations, which show up clearly in the data over time.

Machine learning models can be trained to recognize these patterns and differences. In some experiments, the autoencoder methods performed better. In some examples, the models are first trained using the rich data available from the bearing fault domain. After this initial training, they are fine-tuned using lab-generated data from DH systems. This two-step process ensures that the models can detect faults in DH systems even when there is limited labeled data. The results show that this method can reliably detect faults, even in unpredictable real-world environments.

In certain embodiments, the machine-learning-based fault detection model for identifying operational irregularities in the substation is trained and validated using datasets from multiple sources. In some examples, transfer learning is employed where a model is initially trained on fault data from another domain (and/or using synthetic data) and subsequently fine-tuned with actual district heating measurement data.

In some examples, one or more of the following categories of datasets are employed:
The first exemplary category is a mechanical bearing dataset. In some examples, this dataset may be used as a source domain for transfer learning. This dataset contains time-series vibration data recorded under varying fault conditions (including normal operation and different single-point defects). Due to the abundance of labeled fault data, it provides a solid basis for the model to learn general features of fault-like anomalies, which can be transferred to district heating substation fault detection.

A second exemplary category is laboratory-based thermal energy exchange system dataset. This dataset may be collected from a laboratory setup designed to emulate the operational behavior of a district heating substation. In this setup, a heat exchanger, controllable valve, and external controller replicate realistic heat consumption patterns on the secondary side. Fault scenarios include, for instance, minor valve leaks, more pronounced valve leaks, stuck valves, high heat-curve setpoints, and deviating sensor measurements. These scenarios are introduced under consistent demand and environmental conditions, ensuring that any deviations in measured parameters reflect actual fault conditions. Sensor measurements (including temperature, flow rate, and pressure) are acquired at defined intervals, capturing the transition from normal operation to various fault states. This lab-based dataset enables the model to learn and validate fault detection strategies under controlled, repeatable conditions.

A third exemplary category is a real-world district heating substation dataset. In some examples, e.g. in addition to controlled lab data, an example real-world dataset is collected from multiple substations in an operational district heating network. Sensor readings (such as supply temperature, return temperature, flow rates, etc,) are recorded at periodic intervals. Certain fault types, such as high heat-curve setpoints, incorrect sensor placements, oversized control valves, or secondary-side leakages, may be (partially) labeled, enabling further fine-tuning of the model. Not all substations exhibit every fault, resulting in variable distribution of labeled scenarios across the network. Nonetheless, this real-world dataset can provide valuable insight into practical, day-to-day operational behavior, further improving the fault detection model's robustness.

Across these datasets, supply temperatures, return temperatures, and the derived temperature difference are primary indicators of substation performance. Patterns in can reveal inefficiencies or component-level issues, while temperature differences can highlight the effectiveness of the thermal exchange process. Depending on the data source, measurements may be taken at intervals ranging from seconds to several minutes. Where appropriate, resampling or aggregation methods are employed to ensure consistency across different sampling rates.

The resulting data may include both normal operational segments and a variety of artificially induced and/or naturally occurring fault scenarios (e.g., leaks, stuck valves, sensor anomalies, or inappropriate control strategies). Because labeled fault data from real-world substations can be limited, in some exemplary embodiments, transfer learning is used to address data scarcity. First, the model learns general fault patterns from the mechanical bearing dataset, which exhibits similar high-variance, fault-like signatures. Next, the model is fine-tuned using both the lab-based thermal energy exchange system dataset and the partially labeled real-world substation dataset. This two-step training process enhances the model's ability to accurately identify faults in district heating substations, even when labeled data is sparse.

The collected data, encompassing temperature differentials, flow rates, and other sensor-derived parameters, can be segmented into time-based intervals representative of repeating operational behavior. Each interval undergoes optional preprocessing steps, such as normalization and dynamic time warping, to align and emphasize recurring patterns. An aggregate representation is then produced by averaging the aligned segments and, in some examples, applying differencing to accentuate abrupt changes indicative of faults. The aggregated, preprocessed data (referred to as a "fault signature") is fed into one or more machine-learning-based models (e.g., deep learning model such as autoencoders), which distinguish between normal and faulty conditions by identifying anomalous deviations from learned baseline patterns.

Through this multi-domain, multi-dataset approach, the fault detection model can achieve robust performance in identifying operational irregularities. It thereby supports proactive maintenance strategies, improving overall reliability and efficiency in district heating or other thermal energy exchange systems.

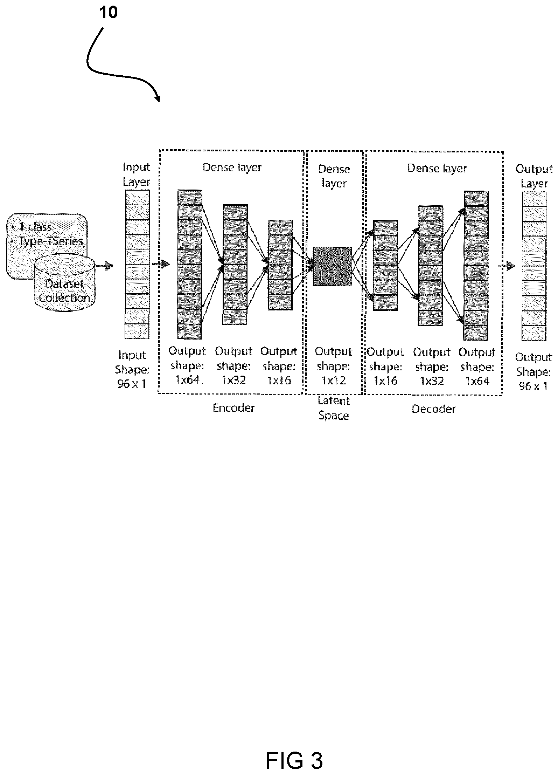

Fig. 3 shows a schematic diagram of an embodiment of an exemplary autoencoder 10 that can be used as machine learning model. In an example, the model 10 is designed to encode and decode the variability in the provided signature of 15-minute time series data for fault detection in DH systems. Other time series data can also be used (e.g. 5 minutes time series data, 10 minutes time series data, 20 minutes time series data, etc.). The model comprises an encoder, bottleneck, and decoder, using fully connected dense layers to capture patterns in the data. The encoder reduces the input dimensionality through three dense layers. At the model's core is a bottleneck layer (latent space), capturing the most salient features of the input data. The decoder mirrors the encoder with dense layers, progressively reconstructing the input data. For district heating substation applications, fully connected layers (dense layers) may be preferred over convolutional layers, because the primary goal is to capture the statistical structure and short-term changes in the "fault signature" rather than localized spatial patterns.

A variational autoencoder (VAE) follows a similar architecture to an autoencoder but introduces a probabilistic latent space. Instead of learning fixed latent variables, the VAE learns a probability distribution with a mean (µ) and a logarithmic variance (log σ^2). This enables the model to sample from a Gaussian distribution during training and inference. The loss function for the VAE combines two components: the reconstruction loss and the Kullback-Leibler divergence. This hybrid loss function ensures that the VAE not only reconstructs the input data accurately but also learns a structured latent space that facilitates anomaly detection and allows the model to improve generalization.

In some examples, repeating daily operational patterns of district heating (DH) substations are captured. The autoencoder is trained to learn a compressed representation of the time-series data and reconstruct this data with minimal error. During normal or expected operation, the reconstruction error is typically low; however, when new operational data deviate from this learned pattern, e.g., due to a fault, the reconstruction error tends to rise. This difference in reconstruction error provides a clear indication of an anomaly.

As an alternative or in addition to autoencoders, a support vector machine such as a one-class support vector machine (OCSVM) may be used to establish a boundary encapsulating learned operational behavior, such as faulty behavior in scenarios where there is more faulty labeled data than normal data. In some examples, the OCSVM may be trained to capture normal behavior, flagging deviations as potential anomalies. Because OCSVMs rely on kernel-based feature mappings, it can be advantageous to perform feature engineering (including the generation of "fault signatures" from district heating measurement data) so that the feature distributions from the source domain (e.g., mechanical bearing data) and the DH system domain are sufficiently aligned. This alignment helps mitigate challenges such as "negative transfer" (i.e., deteriorated model performance if source and target distributions differ significantly).

Because acquiring labeled fault data from district heating systems can be challenging, certain embodiments leverage transfer learning (TL) from a domain where such fault data are more readily available. For instance, mechanical bearing fault datasets are often abundant and exhibit time-series "vibration-like" anomalies resembling those that arise in DH substations experiencing operational irregularities. By initially training models (e.g., OCSVM, AE, or VAE) on the mechanically oriented fault data, the model parameters learn to detect the kind of erratic behaviors characteristic of faults in general. Subsequently, the models are fine-tuned using lab-generated or field-collected DH data representing real or simulated substation faults. This approach adapts the learned representations to the district heating domain, resulting in more accurate fault detection when labeled DH data are limited.

In some examples, a neural-network-based fault detection model (e.g. an AE or VAE) is pre-trained on abundant fault data from a different domain (e.g., mechanical bearing data) and then fine-tuned using the fault signatures derived from the district heating substation's measurement data. For the OCSVM approach, the feature vectors encoding these fault signatures are used to position a decision boundary. During operational use, new fault signatures are generated from incoming data and fed into the trained model. If the incoming signature lies outside the learned boundary (in the OCSVM), or if reconstruction errors (in the AE/VAE) exceed a threshold, the system flags a fault condition.

The obtained time-series measurement data (e.g., supply temperature, return temperature, derived temperature differences, flow rates, pressures) from the one or more district heating substations (or coupled systems downstream) may be segmented into time-based intervals (e.g., daily cycles) and subjected to preprocessing steps (such as normalization or standardization, dynamic time warping alignment, averaging, and differencing) to produce a fault signature that emphasizes short-term changes in substation operation.

Once a fault is detected, the system may trigger alerts, schedule on-site inspections, and/or selectively adjust operational parameters (e.g., valve setpoints, controller gains) to mitigate or preempt further disruption. The model can optionally diagnose a probable fault type, such as stuck valves, sensor errors, or unfavorable control configurations, by analyzing characteristic deviations in the input features or reconstructed signals.

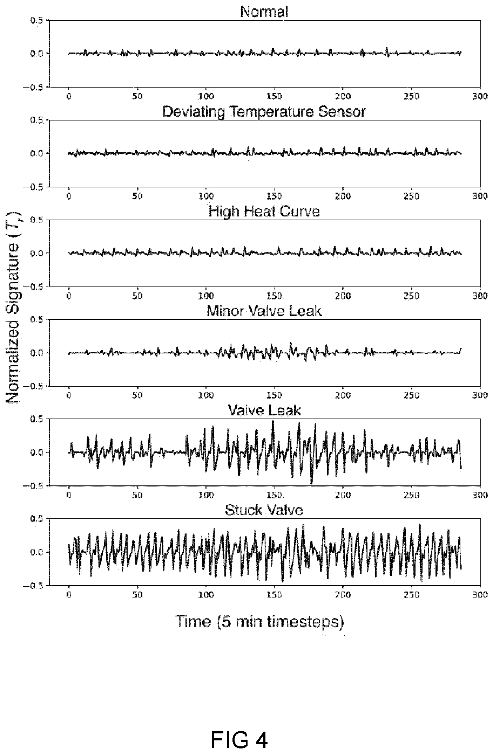

Fig. 4 shows a schematic diagram of an embodiment of graphs. Six time-series plots compare a "Normal" substation signature to five fault conditions, namely "Deviating Temperature Sensor," "High Heat Curve," "Minor Valve Leak," "Valve Leak," and "Stuck Valve." Each plot shows the normalized fault signature (vertical axis) over time in 5-minute steps (horizontal axis). Normal operation remains relatively steady, whereas faulty conditions exhibit increasingly erratic fluctuations.

In some experiments, the method was evaluated using two distinct datasets to assess both its effectiveness under controlled conditions and its applicability in operational district heating environments. A first dataset was generated in a laboratory setting (referred to here as "lab data") and includes known ground-truth information regarding various induced faults. A second dataset comprises real-world time-series measurement data from actual district heating substations, capturing day-to-day operational conditions and potential fault scenarios.

During evaluation, multiple performance metrics were used to quantify how effectively the fault detection model distinguishes faulty behavior from normal operation, including:
- Accuracy, being the proportion of correctly identified instances (both normal and faulty) out of the total instances evaluated.
- Precision, being the proportion of correctly identified faulty instances among all instances predicted as faulty. A higher precision indicates fewer false alarms.
- Recall (Sensitivity), being the proportion of truly faulty instances that were correctly identified. A higher recall indicates fewer missed faults.
- F1 Score, being the harmonic mean of Precision and Recall, providing a balanced measure of both false positives and false negatives.

By applying these metrics, the performance of the fault detection model can be comprehensively evaluated. In tests involving the lab-generated data, the presence of intentionally induced faults offered a known baseline against which the model's ability to detect and classify abnormal conditions was tested. In the real-world dataset, the model's generalization capability was examined under naturally occurring operational variations, an essential demonstration of its suitability for deployment in district heating substations operating under diverse and unpredictable conditions.

These experiments confirmed the robustness of the proposed fault detection strategy, as short-term variations indicative of faults could be identified consistently across daily intervals. By combining daily segmentation, normalization, and, where appropriate, time-alignment techniques such as dynamic time warping, the model successfully learned characteristic normal behaviors and flagged anomalies with high accuracy and reliability. As a result, the invention enables both improved detection of operational irregularities and more precise guidance for maintenance actions, ultimately enhancing the efficiency and reliability of district heating systems.

In an exemplary set of laboratory tests, time-series measurement data were collected from a district heating substation operating under both normal and deliberately induced faulty conditions. The induced faults included:
- Minor valve leaks (MVL),
- Significant valve leaks (VL),
- Stuck valves (SV),
- Improper control curve settings (e.g., a heat curve set too high, HHC),
- Defective temperature sensors (DTS), and
- Open control valves (OCV).

These exemplary scenarios were chosen to reflect common fault types discussed herein (e.g., valve leaks, stuck valves, faulty sensors, and incorrect control strategies).

In the experiments, daily measurement intervals were extracted to capture the substation's repeating operational patterns. To highlight short-term changes, each day's data were processed by:
- Segmentation into discrete 24-hour windows.
- (Optional) Standardization or normalization to ensure consistent scaling.
- (Optional) Alignment of operational features (e.g., via dynamic time warping), so that temporal shifts did not obscure recurring behaviors.
- First-order differencing, computing the difference between consecutive time steps in each daily interval.

Applying this differencing step yielded daily signatures in which pronounced peaks corresponded to abrupt substation adjustments (e.g., sudden temperature fluctuations), whereas small peaks indicated more stable operation. Figure 4 (referenced here as an example) depicts representative daily signatures for each scenario, illustrating how fault conditions amplify short-term deviations compared to normal operation.

Table 1 below provides an illustrative ranking of the various scenarios based on the variance observed in both the temperature difference (ΔT) signature (i.e., supply temperature minus return temperature) and the return temperature (Tr) signature, over two consecutive weeks. Lower variance indicates greater stability:

The results indicated that the normal operation scenario consistently exhibits the lowest variance in both ΔT and Tr. By contrast, faults that disrupt or force primary flow regardless of actual demand (e.g., stuck valves or valve leaks) yield significantly higher variability, reflecting unstable heat exchange and erratic system adjustments. Improper control settings (HHC) and defective sensors (DTS) also elevate short-term fluctuations, albeit to a lesser extent than severe valve faults.

To validate the statistical significance of these differences, a Fligner-Killeen test (a non-parametric method for assessing homogeneity of variances) was applied. In nearly all cases, pp-values fell well below a 0.05 threshold, confirming that fault-induced variability differs significantly from normal operation:

Although minor deviations (e.g., minor valve leaks, MVL) may not always register as dramatically as stuck valves (SV), even these lower-level faults produce noticeable shifts in substation behavior relative to the stable baseline of normal operation.

Overall, it is clear that the method of the disclosure improves identifying and quantifying fault-induced instabilities.

In fig. 4, the following graphs are given:
- Normal Operation. The data exhibits low variance and subtle daily peaks, indicating consistent, stable thermal exchange.
- Minor Valve Leak (MVL). Causes relatively small but detectable increases in variance; the system compensates with minor adjustments to maintain steady operation.

Significant Valve Leak (VL). Allows unintended primary flow when there is little or no secondary demand, leading to frequent and larger thermal fluctuations.

Stuck Valve (SV). Constitutes a severe fault in which the control valve is constantly open, forcing flow on the primary side regardless of demand, thereby causing sharp, erratic variations and the highest variance readings.

Improper Control Settings (HHC). Increases the heat curve setting excessively, prompting the substation to deliver more heat than necessary, producing rapid or oversized adjustments and consequently higher variance.

Defective Temperature Sensor (DTS). Causes incorrect temperature readings on the secondary side, driving the system to over- or under-compensate. These erroneous adjustments manifest as instability, reflected by elevated short-term peaks.

These empirical observations reinforce that faults, particularly those directly impacting flow regulation (stuck or leaking valves), lead to amplified variance in the daily ΔT and Tr signatures. Consequently, monitoring and analyzing short-term deviations in these parameters facilitates robust detection of operational irregularities, supporting proactive fault identification and more reliable district heating system performance.

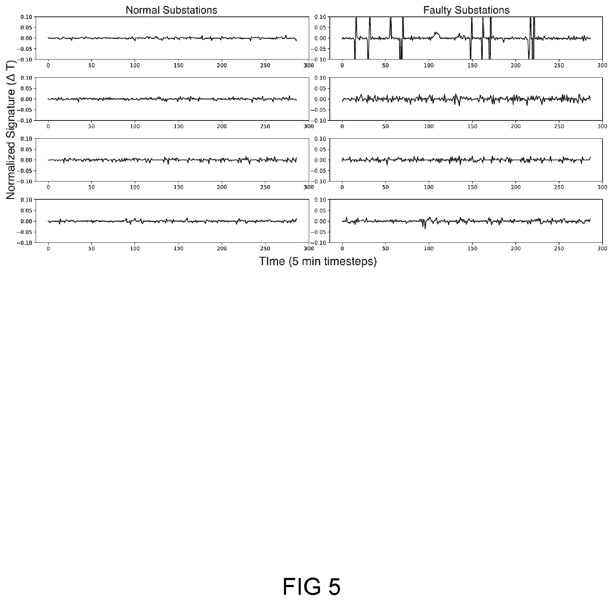

Fig. 5 shows a schematic diagram of an embodiment of graphs. The shown time-series plots compare normalized ΔT signatures for normal substations (left column) and faulty substations (right column). The x-axis (0-300) represents time in 5-minute increments, while the y-axis shows the normalized temperature-difference signal. Normal traces remain relatively steady, whereas faulty traces exhibit larger, erratic fluctuations.

In an example, real-world operational data from multiple district heating (DH) substations was obtained to assess the applicability of the fault detection method described herein. As discussed elsewhere in this description, the measurement data may include supply and return temperatures, as well as derived parameters such as the temperature difference (AT= T_s - T_r). Each substation was labeled "normal" or "faulty" based on engineering assessments and/or operational records.

In one instance, fault conditions were introduced by different types of irregular operational behavior, for example:
- HHC (High Heat Curve). This can be a control setting causing an excessively high supply temperature relative to demand.
- WSP (Wrong Set Point). This can be an incorrectly configured set point for the heating curve or supply control, causing deviations in normal operation.
- OCV (Overriding Control Valve). This can be a valve behavior overriding the normal control strategy (e.g., stuck or partially open/closed).
- LSL (Leak/Severe Loss). This can be leaks, stuck valves, or improperly sealed components leading to unintended heat losses or abnormal flow characteristics.

In real-world data, ΔTproved effective in distinguishing normal from faulty scenarios, although distinctions were sometimes more subtle than in controlled (laboratory) conditions. Visual inspection showed that normal operation generally exhibited more stable ΔT patterns, whereas faulty behavior introduced irregular fluctuations. However, because real-world measurements can contain noise or overlapping signatures (e.g., routine daily variations), relying solely on direct human interpretation can be error-prone.

To underscore these observations quantitatively, statistical significance tests were conducted comparing the distributions of ΔT (and, in some examples, return temperature Tr) under normal versus faulty states. One test involved ranking substation data over time based on the stability (or variance) of each measured signature. Substations labeled "faulty" tended to show lower stability rankings in ΔT, distinguishing them from normal scenarios. In some instances (e.g., certain LSL conditions), the impact on the Tr parameter alone was less pronounced, indicating that the temperature-difference-based signatures (ΔT) could offer a more robust indicator of faults for certain types of irregularities.

Overall, these findings highlight that, even under real operating conditions, generating and analyzing ΔT-based fault signatures provides a reliable means of detecting irregularities across various fault scenarios. Machine-learning-based models can further enhance detection accuracy by recognizing subtle, otherwise undetectable patterns in these time-series data.

For testing purposes, various machine-learning-based fault detection models (for instance, one-class support vector machines (OCSVM), autoencoders (AE), and variational autoencoders (VAE)) were trained and tested on both controlled "laboratory" data and real-world substation data. The laboratory data typically contain less noise and more clearly differentiated fault conditions, enabling near-perfect classification in some cases.

When transitioning to real-world substation data, the inherent noise and overlapping patterns increased the difficulty of classification. Nonetheless, the ΔT signature showed robust performance, particularly when used in combination with autoencoder or variational autoencoder models. In one example, an AE-based fault detection model achieved an F1 score of approximately 91% on real-world data, and a VAE-based model achieved approximately 89%. These high scores demonstrate the ability of machine-learning-based techniques to adapt beyond controlled conditions and accurately identify operational irregularities in complex, real-world DH systems.

In some embodiments, an OCSVM-based model demonstrated strong performance on controlled data but experienced a more pronounced decrease in performance when exposed to the broader variability of real-world datasets. This behavior underscores the advantage of models (e.g., AEs, VAEs) that learn richer latent representations and can better generalize to noisy conditions.

The evaluations confirmed that ΔT (i.e., supply temperature minus return temperature) is often a more robust signature than return temperature (Tr) alone. While certain faults may only slightly alter Tr, most faults consistently disrupt ΔT. Laboratory and real-world results revealed that ΔT frequently exhibits characteristic fluctuations analogous to "vibration-like" patterns found in other fault domains (e.g., mechanical systems such as faulty bearings). This similarity reinforces the transfer-learning strategy disclosed herein, wherein a model can be pre-trained on abundant data from other domains with periodic or vibration-based signatures and subsequently fine-tuned on DH-specific data.

For instance, models initially trained on vibration data from mechanical bearing faults can capture the notion of "unstable" or "erratic" behavior. By fine-tuning with ΔT-based DH fault signatures (collected under known or semi-labeled conditions), the same model can successfully detect diverse substation faults. Empirical results demonstrated that such transfer learning enables high fault detection accuracy, even when the labeled DH dataset is limited.

In evaluations, classification performance was summarized using confusion matrices or contingency tables representing the true positives (TP), false negatives (FN), true negatives (TN), and false positives (FP) for each fault class. Controlled (lab-based) evaluations often result in near-perfect recognition of normal operation and most fault conditions, with minor misclassifications in scenarios exhibiting marginal or intermittent deviations. Under real-world conditions, a distinction can be made between normal operation, certain fault types (e.g., HHC, OCV, LSL) and complex faults (e.g., WSP). For normal operation, large percentages of normal data points are correctly identified, indicating high specificity for stable, expected behavior. For certain fault types (e.g., HHC, OCV, LSL), distinctive and persistent ΔT disruptions frequently yield 100% true-positive detection in some trial runs. For complex faults (e.g., WSP), partial overlaps with normal patterns can lead to a modest rate of false negatives, highlighting an area for future refinement or more specialized model training.

Despite real-world noise, the overall high accuracy demonstrates that the disclosed fault detection system and method can reliably differentiate between normal and faulty operational states.

These results confirm that monitoring short-term changes in substation measurements, especially ΔT over time, enables robust detection of operational irregularities. When combined with suitable machine-learning-based fault detection models and optional transfer learning from related domains, the system can offer improved reliability, with early detection of substation faults (valve issues, sensor malfunctions, control errors) to mitigate disruptions. Further, an enhanced energy efficiency can be obtained, by rapid detection and correction of inefficiencies that drive up return temperatures and hinder overall DH performance.

It will be appreciated that in the methods described some steps can be re-ordered, and/or one or more steps may be omitted depending on the specific implementation requirements. It will also be understood that alternative methods may be applied instead of, or in combination with, the described steps.

It will be appreciated that the method may include computer implemented steps. All above mentioned steps can be computer implemented steps. Embodiments may comprise computer apparatus, wherein processes performed in computer apparatus. The invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program. For example, the carrier may comprise a storage medium, such as a ROM, for example a semiconductor ROM or hard disk. Further, the carrier may be a transmissible carrier such as an electrical or optical signal which may be conveyed via electrical or optical cable or by radio or other means, e.g. via the internet or cloud.

Some embodiments may be implemented, for example, using a machine or tangible computer-readable medium or article which may store an instruction or a set of instructions that, if executed by a machine, may cause the machine to perform a method and/or operations in accordance with the embodiments.

Various embodiments may be implemented using hardware elements, software elements, or a combination of both. Examples of hardware elements may include processors, microprocessors, circuits, application specific integrated circuits (ASIC), programmable logic devices (PLD), digital signal processors (DSP), field programmable gate array (FPGA), logic gates, registers, semiconductor device, microchips, chip sets, et cetera. Examples of software may include software components, programs, applications, computer programs, application programs, system programs, machine programs, operating system software, mobile apps, middleware, firmware, software modules, routines, subroutines, functions, computer implemented methods, procedures, software interfaces, application program interfaces (API), methods, instruction sets, computing code, computer code, et cetera.

Herein, the invention is described with reference to specific examples of embodiments of the invention. It will, however, be evident that various modifications, variations, alternatives and changes may be made therein, without departing from the essence of the invention. For the purpose of clarity and a concise description features are described herein as part of the same or separate embodiments, however, alternative embodiments having combinations of all or some of the features described in these separate embodiments are also envisaged and understood to fall within the framework of the invention as outlined by the claims. The specifications, figures and examples are, accordingly, to be regarded in an illustrative sense rather than in a restrictive sense. The invention is intended to embrace all alternatives, modifications and variations which fall within the scope of the appended claims. Further, many of the elements that are described are functional entities that may be implemented as discrete or distributed components or in conjunction with other components, in any suitable combination and location.

In the claims, any reference signs placed between parentheses shall not be construed as limiting the claim. The word 'comprising' does not exclude the presence of other features or steps than those listed in a claim. Furthermore, the words 'a' and 'an' shall not be construed as limited to 'only one', but instead are used to mean 'at least one', and do not exclude a plurality. The term "and/or" includes any and all combinations of one or more of the associated listed items. The mere fact that certain measures are recited in mutually different claims does not indicate that a combination of these measures cannot be used to an advantage.

## Claims

1. A computer implemented method for detecting operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one substation connected to the first side and the second side, the substation being configured to facilitate thermal energy exchange between the first side and the second side, wherein one or more downstream heating/cooling systems at the second side are coupled to the at least one substation, wherein the method includes:
obtaining time-series measurement data indicative of operational conditions in the substation;
generating a fault signature from said time-series measurement data by segmenting the measurement data into one or more time-based intervals representative of repeating operational behavior, and producing, from the intervals, an aggregate representation that emphasizes short-term changes in the substation's operation relative to a baseline;
providing the fault signature as an input to a machine-learning-based fault detection model trained or configured to distinguish faulty behavior from normal operation based on at least said fault signature as input; and
identifying a fault condition in the district heating substation and/or in the one or more downstream heating/cooling systems coupled to the district heating substation when the fault signature is determined by the fault detection model to deviate from normal operational behavior beyond a predefined criterion.

2. The computer-implemented method of claim 1, wherein the time-series measurement data is obtained over one or more operational periods and includes at least one temperature measurement, a derived temperature difference, or any combination thereof, and wherein the obtained measurement data is segmented into discrete time-based intervals representative of substation operation, each interval covering at least part of a daily cycle.

3. The computer-implemented method of claim 1 or 2, wherein after segmenting and prior to producing the aggregate representation, one or more normalization or standardization steps are performed on each interval.

4. The computer-implemented method of any one of the preceding claims, wherein the method further includes aligning the intervals using a dynamic time-warping-based technique to compensate for temporal shifts in operational behavior from one interval to another.

5. The computer-implemented method of claim 4, wherein the dynamic time-warping-based technique comprises dynamic time warping barycenter averaging with a warp constraint to prevent that the alignment over-extends segments of the time series.

6. The computer-implemented method of any one of the preceding claims, further comprising generating an average operational pattern for a given time-based interval based on aligned intervals.

7. The computer-implemented method of claim 5, further comprising applying a differencing operation to said average operational pattern in order to increase changes in measurements from one time step to a subsequent time step, wherein the differencing operation computes, for each time step in the average operational pattern, a difference between said time step and the immediately preceding time step.

8. The computer-implemented method of any one of the preceding claims, wherein the fault detection model is implemented as an autoencoder, the autoencoder being trained or configured to learn a representation of at least one class of operational behavior.

9. The computer-implemented method of any one of the preceding claims, wherein the temperature difference is defined as a difference between a supply temperature and a return temperature of the district heating substation, and wherein measurement data used in generating the fault signature comprises said temperature difference over a plurality of time steps.

10. The computer-implemented method of any one of the preceding claims, wherein the fault detection model is pre-trained on fault data originating from mechanical bearings or another domain exhibiting periodic or vibration-based fault characteristics, and wherein the fault detection model is subsequently fine-tuned using labeled or partially labeled district heating substation data, in order to transfer learned fault patterns from said external domain to the district heating substation domain.

11. The computer-implemented method of any one of the preceding claims, wherein the measurement data for each interval includes a plurality of sensor-derived parameters usable for identifying recurring district heating substation behavior over repeated operational periods.

12. The computer-implemented method of any one of the preceding claims, further comprising diagnosing a type of fault based on the output of the fault detection model.

13. The computer-implemented method of any one of the preceding claims, wherein the output of the fault detection model triggers at least one maintenance action for the district heating substation, comprising generating an alert, scheduling an on-site inspection, and/or automatically adjusting an operational parameter to mitigate a detected or impending fault.

14. A detection system for detecting operational irregularities in a thermal energy exchange system, wherein the thermal energy exchange system comprises a first side, a second side and an interface between the first side and the second side, wherein heating/cooling is generated at the first side upstream to the interface, wherein heating/cooling is consumed at the second side downstream to the interface, and wherein the interface is provided by means of at least one substation connected to the first side and the second side, the substation being configured to facilitate thermal energy exchange between the first side and the second side, wherein one or more downstream heating/cooling systems at the second side are coupled to the at least one substation, the detection system comprising:
one or more processors; and
memory storing instructions that, when executed by the one or more processors, cause the system to:
obtain time-series measurement data indicative of operational conditions in the district heating substation;
generate a fault signature from the time-series measurement data by segmenting the measurement data into one or more time-based intervals representative of repeating operational behavior, and producing, from those intervals, an aggregate representation that emphasizes short-term changes in the district heating substation's operation relative to a baseline;
provide the fault signature as input to a machine-learning-based fault detection model, wherein the fault detection model is trained or configured to distinguish faulty behavior from normal operation based on at least the fault signature as input; and
identify a fault condition in the district heating substation and/or in the one or more downstream heating/cooling systems coupled to the district heating substation when the fault signature is determined by the fault detection model to deviate from normal operational behavior beyond a predefined criterion.

15. A district heating system comprising one or more substations and a supervisory control unit configured to perform the method of any one of the preceding claims 1-13 in order to at least detect fault conditions throughout a district heating network.
